Europäisches Patentamt

**European Patent Office**

Office européen des brevets

(19)

(11) Numéro de publication:

**0 047 720**
A2

(12) **DEMANDE DE BREVET EUROPEEN**

(21) Numéro de dépôt: **81810366.5**

(22) Date de dépôt: **07.09.81**

(51) Int. Cl.³: **G 01 N 1/32,** B 24 B 37/04

(30) Priorité: **10.09.80 CH 6794/80**
**21.10.80 FR 8022535**

(43) Date de publication de la demande: **17.03.82**
**Bulletin 82/11**

(84) Etats contractants désignés: **DE GB**

(71) Demandeur: **EBAUCHES S.A., Fauborg de l'Hôpital 1,**
**CH-2001 Neuchatel (CH)**

(72) Inventeur: **Guignard, Jean-Paul, Haut 3, CH-1347 Le**
**Sentier (CH)**

(74) Mandataire: **Boukhors, Alain et al, Ebauches**
**S.A. 1 Fauborgh de l'Hôpital, CH-2001 Neuchâtel (CH)**

(54) **Procédé et dispositif de polissage d'un échantillon solide.**

(57) Procédé et dispositif de polissage d'un échantillon solide notamment d'un échantillon métallographique.

On applique l'échantillon par une face de contact (1a) sur un milieu abrasif souple (5a) en mouvement relatif par rapport audit échantillon, ce mouvement relatif étant principalement un mouvement de translation unindirectionnel, moyennant quoi on obtient, après polissage, un bord à angle vif sur le côté de la périphérie de la face de contact orienté en sens inverse du déplacement de l'échantillon par rapport à la paroi abrasive.

EP 0 047 720 A2

ESA 60
APB/DW

# PROCEDE ET DISPOSITIF DE POLISSAGE D'UN ECHANTILLON SOLIDE

La présente invention concerne un procédé de polissage d'un échantillon solide notamment d'un échantillon métallographique, selon lequel on applique l'échantillon, par une face de contact, sur un milieu abrasif souple en mouvement relatif par rapport audit échantillon.

L'invention concerne aussi un dispositif de polissage mettant en oeuvre ledit procédé.

La métallurgie structurale offre de nombreux cas où l'étude des couches de surface d'un échantillon métallique est d'une importance primordiale; ces cas sont notamment :

- transformations physico-chimiques superficielles provoquées par échange à haute température entre le métal et l'atmosphère de chauffage (recuit, trempe, etc...).

- couches de diffusion ou de combinaison obtenues par traitement thermochimique (cémentation, nitruration, diffusion ionique, etc...).

- couche de protection déposée par voie chimique ou électrolytique.

Malheureusement, la préparation par polissage d'une face à observer optiquement d'un échantillon est toujours très difficile car on obtient sur les bords de cette face un arrondi dû au polissage, empêchant dans la plupart des cas la mise en évidence claire des structures métallographiques intéressantes, situées au voisinage immédiat de la surface examinée en coupe.

Le polissage de finition d'un échantillon métallographique préalablement enrobé est généralement effectué par frottement sous pression modérée, sur un disque tournant recouvert d'un milieu abrasif constitué par un tissu qui est humecté par la projection sur ce dernier d'une suspension aqueuse d'abrasif fin.

Selon le procédé de polissage classique, pendant l'application de l'échantillon sur le milieu abrasif, on fait tourner constamment ledit échantillon sur 360° autour d'un axe perpendiculaire à la face de contact de l'échantillon.

La matière d'enrobage de l'échantillon est en général plus tendre; elle s'use donc plus rapidement que l'échantillon métallique enrobé. Par conséquent, ce dernier présente, sur la face polie, en fonction de la durée de l'opération, un relief de plus en plus proéminent et dont les bords, de plus en plus arrondis, se prêtent mal à l'observation au microscope optique, une mise au point optique sur une zone substantielle d'un bord de la face polie étant rendue impossible par la forme arrondie de ce bord.

Différents moyens ont été proposés pour éviter cet inconvénient : nickelage épais, enrobage composite, etc... Mais ces procédés n'apportent pas toujours les résultats espérés et, en outre, ils augmentent sensiblement les temps de préparation.

C'est pourquoi, l'un des buts de l'invention est de proposer un procédé de polissage évitant la formation de cet arrondi sur une partie du bord de la face polie de l'échantillon.

Ce but est atteint conformément à l'invention du fait que le mouvement relatif entre la face de contact et la paroi abrasive est principalement un mouvement de translation unidirectionnel, moyennant quoi on obtient, après polissage, un bord à angle vif sur le côté de la périphérie de la face de contact orienté en sens inverse du déplacement de l'échatillon par rapport au milieu abrasif.

Avantageusement, afin d'éviter la formation de sillons ou stries de polissage, on imprime en outre à l'échantillon, par rapport au milieu abrasif, un mouvement oscillant de rotation autour d'un axe perpendiculaire à la face de contact. De préférence, l'amplitude angulaire de ce mouvement oscillant est inférieure à 90° et elle est, typiquement, d'environ 45°.

Selon un mode de réalisation préféré, on utilise un milieu abrasif sensiblement plan animé d'un mouvement absolu de rotation autour d'un axe qui lui est perpendiculaire, et lors de l'application de l'échantillon sur cet milieu tournant, on imprime audit échantillon un mouvement absolu sensiblement de translation pour lequel la face de contact décrit un trajet situé à l'intérieur d'un secteur imaginaire fixe de 90° d'ouverture dont le sommet coïncide avec le centre de rotation du milieu abrasif.

Ledit trajet peut être une boucle fermée. Alternativement, on peut imprimer à l'échantillon un mouvement au cours duquel la face de contact décrit en va-et-vient un trajet sensiblement rectiligne et dont les deux extrémités sont situées sensiblement à égale distance de l'axe de rotation du milieu abrasif.

Ce procédé est avantageusement mis en oeuvre dans un dispositif de polissage, caractérisé en ce qu'il comprend :

- un bâti;

- un disque de polissage monté sur le bâti rotatif autour de son axe, un milieu abrasif souple étant fixé sur la face supérieure de ce disque;

- un moteur pour entraîner ce disque en rotation autour de son axe;

- au moins un support sur lequel un échantillon peut être monté avec une partie de ce dernier dépassant dudit support;

- des moyens pour solliciter ce support en direction du disque de polissage pour appliquer ladite partie dépassante de l'échantillon sur ledit milieu abrasif; et

- des moyens pour déplacer ledit support par rapport au bâti suivant un mouvement pour lequel ledit échantillon parcourt un trajet situé à l'intérieur d'un secteur imaginaire fixe ayant pour sommet le centre du disque et 90° d'ouverture angulaire.

Les caractéristiques et avantages de l'invention seront mieux compris à la lecture de la description qui va suivre de plusieurs exemples de réalisation de l'invention, description faite en référence aux dessins annexés sur lesquels :

- la figure 1 est une coupe longitudinale à travers un échantillon poli selon l'art antérieur;

- la figure 2 est une vue schématique partielle en plan d'un dispositif de polissage, montrant un procédé de polissage selon un mode de réalisation de l'invention;

- la figure 3 est une vue schématique partielle en plan d'un dispositif de polissage, montrant un autre mode de réalisation du procédé de polissage selon l'invention;

- la figure 4 est une vue partielle en coupe longitudinale à travers un échantillon poli conformément au procédé selon l'invention;

- la figure 5 est une vue schématique en coupe montrant le positionnement d'un échantillon par rapport à l'objectif d'un microscope avec lequel on observe un bord de la face polie de l'échantillon;
- la figure 6 est une vue schématique en plan d'un dispositif de polissage selon un mode de réalisation de l'invention;
- la figure 7 est une vue schématique en élévation et en coupe partielle du dispositif de polissage de la figure 6;
- la figure 8 est une vue schématique en plan d'un dispositif de polissage selon un autre mode de réalisation de l'invention; et
- la figure 9 est une vue partielle en coupe verticale suivant le plan IX-IX de la figure 8.

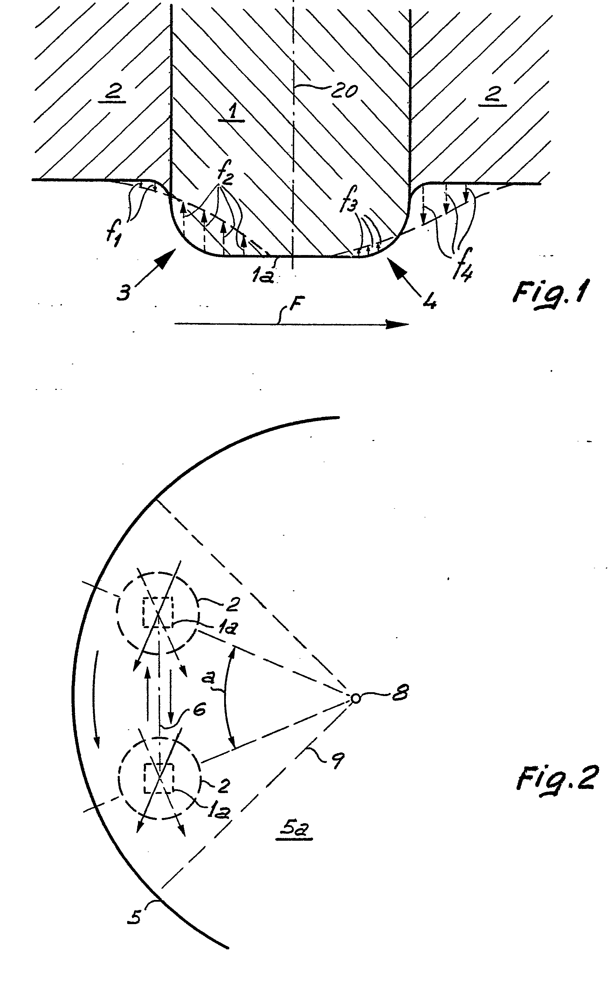

La figure 1 montre le profil que présente la face polie 1a d'un échantillon métallographique 1 entouré par un enrobage 2. La préparation 1, 2 possède un axe longitudinal 20 orthogonal à la face polie 1a. Le polissage est effectué en appliquant la préparation 1, 2 contre un milieu abrasif souple (non représenté) qui est fixé sur un disque horizontal tournant (également non représenté), et qui est constitué par un tissu humecté par la projection sur ledit tissu d'une suspension aqueuse d'abrasif fin.

A chaque instant de l'opération de polissage, la face 1a de l'échantillon métallique enrobé 1, 2, quelle que soit sa forme, présente relativement à la direction du déplacement de l'échantillon 1, 2 par rapport au milieu abrasif, un bord avant 3, exposé au "mouvement rentrant" de ce milieu abrasif, et un bord arrière 4, exposé au "mouvement sortant" de ce même milieu abrasif.

En raison de la dénivellation progressive se formant en cours de polissage, entre la matière d'enrobage 2 et l'échantillon 1 enrobé, la dynamique de déformation du milieu abrasif, au voisinage du bord avant 3, comprend une faible dépression (flèches $f_1$), suivie d'une forte suppression (flèches $f_2$) agissant sur l'angle de l'échantillon métallique au niveau du bord 3. Ces phénomènes dynamiques correspondent, respectivement, à une diminution suivie d'une augmentation de l'énergie cinétique d'abrasion, dont résulte le profil arrondi caractéristique du bord 3 tel qu'illustré schématiquement par la figure 1.

Au voisinage du bord arrière 4 par contre, le contact frottant entre l'échantillon enrobé (la préparation 1, 2) et le milieu abrasif est caractérisé tout d'abord par une faible surpression (flèches $f_3$) agissant sur l'échantillon métallique 1, puis par une forte dépression (flèches $f_4$) atténuant l'énergie cinétique d'abrasion dans la traînée du bord arrière 4.

De plus, les variations de l'énergie d'abrasion qui viennent d'être décrites dépendent également des effets d'inertie et de conservation du mouvement, qui tendent à contrarier la déformation du milieu abrasif. Sur la figure 1, aussi bien le bord arrière que le bord avant présentent une section droite arrondie, car cette figure représente une préparation 1, 2 qui a été polie en utilisant le procédé classique, c'est-à-dire un procédé selon lequel la préparation 1, 2 est, durant son polissage, constamment déplacée, relativement à la direction de polissage F, en rotation autour de son axe 20.

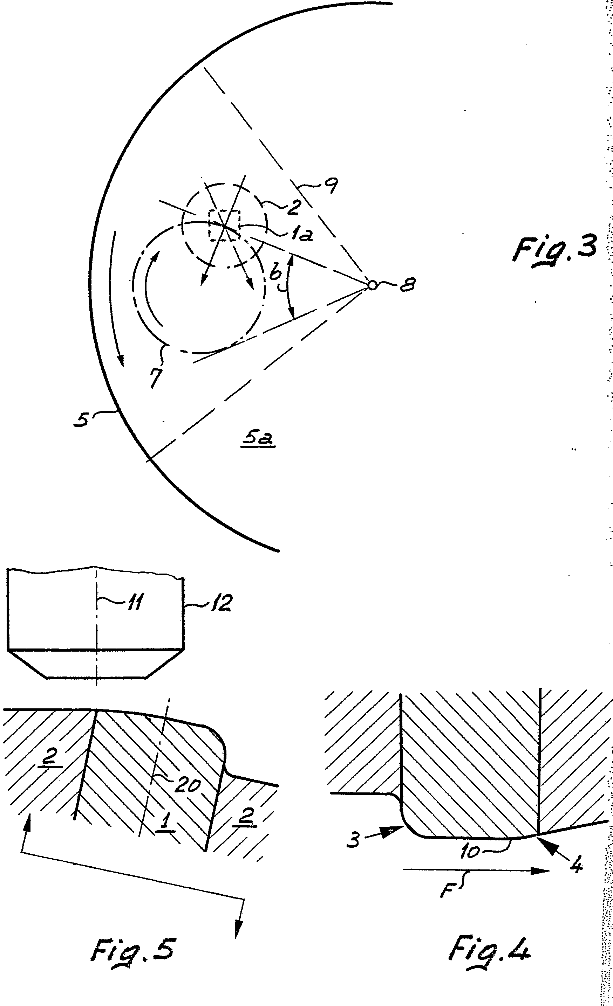

La demanderesse a constaté que si, contrairement au procédé habituel de polissage, on maintient la préparation 1, 2 dans une orientation constante, ou à peu près constante, par rapport à la direction F du polissage, en d'autres termes : si le mouvement relatif entre la préparation 1, 2 et le milieu abrasif est un mouvement de translation ayant une orientation moyenne demeurant constante, on obtient (fig. 4) un bord avant 3 ayant une section droite fortement arrondie et, à l'opposé dudit bord avant 3, un bord arrière 4 suffisamment peu déformé pour permettre une observation en coupe des structures superficielles, dans les meilleures conditions possibles.

Dans la description qui suit, on désigne par la référence 5 un disque horizontal tournant qui est recouvert sur sa face supérieure d'un tissu recevant la suspension aqueuse d'abrasif, ce tissu ainsi humecté constituant un milieu abrasif souple qui est désigné dans la suite de la présente description par la référence 5a.

Lors de l'application de la préparation 1, 2 sur le milieu abrasif 5a, plutôt que de maintenir ladite préparation dans une position absolue constante, il est préférable de faire varier modérément son orientation afin d'éviter, en croisant les traits de polissage, l'apparition de sillons ou de "comètes". Les meilleurs résultats sont atteints en imprimant à la préparation 1, 2 un mouvement pour lequel sa face 1a en contact avec le milieu 5a ou bien se déplace en va-et-vient sur un segment de droite 6 inscrit dans un angle "a" de l'ordre de 45°, segment dont les deux extrémités se trouvent sensiblement à égale distance du centre 8 du disque 5 (fig. 2), ou bien décrit une boucle fermée, par exemple un trajet circulaire 7, également inscrite dans un angle "b" d'environ 45° (fig. 3). Les angles "a" et "b" sont à côtés fixes et ils ont pour sommet le centre de rotation 8 du disque de polissage 5. Les angles "a" et "b" déterminent un secteur imaginaire fixe coplanaire par rapport au disque de polissage 5, 5a, et dont le sommet est le centre de rotation 8. Ce secteur imaginaire fixe est, bien entendu, contenu dans un secteur imaginaire fixe analogue 9 ayant un angle d'ouverture de 90°.

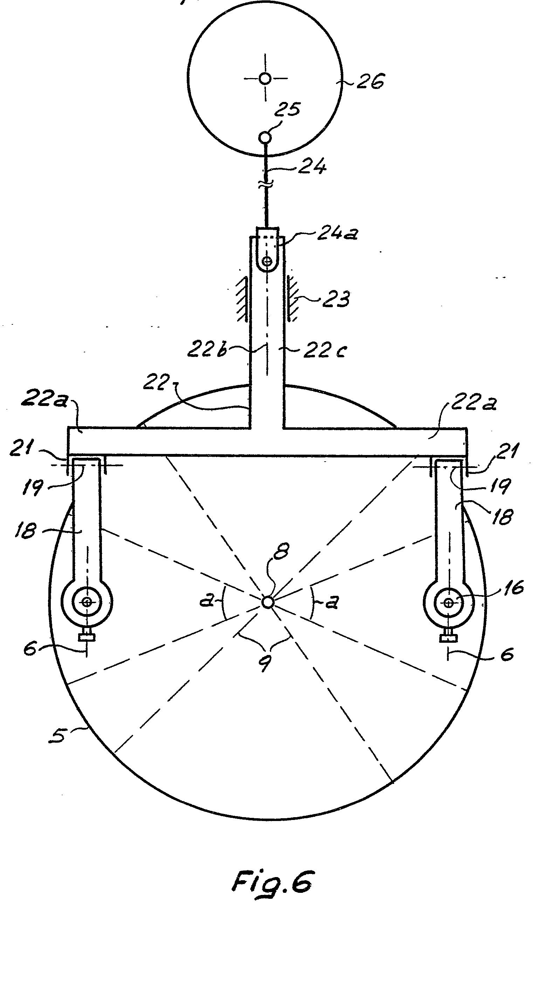

En pratique et comme le montre la figure 4, la zone du bord arrière 4 de l'échantillon métallographique 1, malgré l'angle vif du bord 4, présente tout de même un profil faiblement arrondi, selon un arc de grand rayon 10. Il est possible de remédier à cet inconvénient en inclinant légèrement l'axe 20 de la préparation 1, 2 par rapport à la direction de l'axe 11 de l'objectif 12 du microscope d'observation (fig. 5) par exemple au moyen d'une table inclinable non représentée.

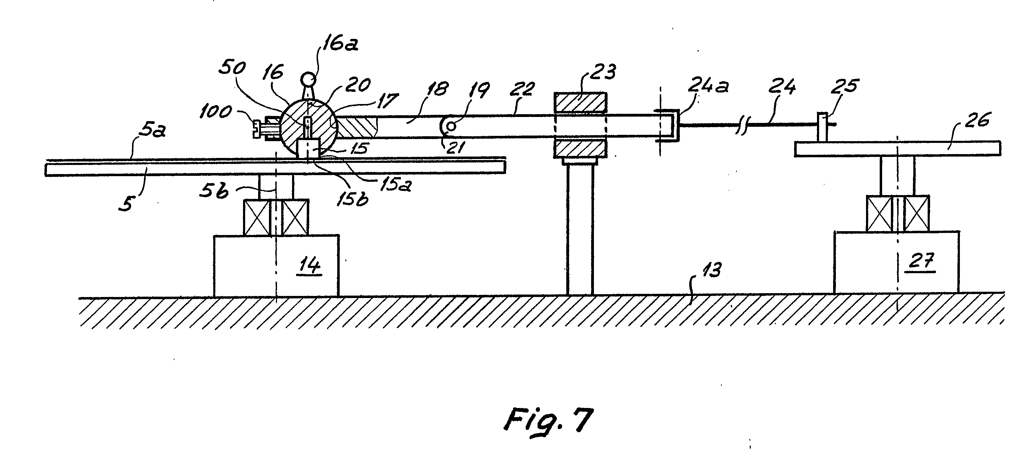

Les figures 6 et 7, d'une part, et 8 et 9, d'autre part, représentent deux modes de réalisations particuliers d'un dispositif de polissage selon l'invention.

Le dispositif représenté sur les figures 6 et 7 comprend :
- un bâti 13;
- un disque de polissage horizontal 5 monté sur le bâti rotatif autour de son axe 5b, ce disque comportant sur sa face supérieure un milieu abrasif souple 5a formé d'un tissu humecté par une suspension aqueuse d'abrasif fin, ce tissu étant fixé sur le disque 5;
- un moteur 14 pour entraîner ce disque 5 en rotation autour de son axe 5b;
- deux supports sur chacun desquels un échantillon enrobé 15 peut être monté avec une partie 15a de ce dernier dépassant dudit support:
- des moyens pour solliciter chacun de ces supports en direction du disque de polissage 5 pour appliquer l'échantillon 15, par une face de contact 15b de ce dernier, sur le milieu abrasif 5a; et

- des moyens pour déplacer chacun desdits supports par rapport au bâti 13 suivant un mouvement pour lequel la face de contact 15b maintenue appliquée contre le milieu abrasif 5a parcourt un trajet situé à l'intérieur d'un secteur imaginaire fixe 9 ayant pour sommet le centre 8 du disque 5 et environ 90° d'ouverture angulaire.

Chaque support d'échantillon comprend une pièce sphérique 16 dans laquelle est fixé l'échantillon enrobé 15; la pièce 16 est fixée réglable en rotation autour de son centre 50 dans un évidement de forme correspondante 17 ménagé à une extrémité d'un bras 18.

La pièce 16 comporte une tige de manoeuvre 16a à l'aide de laquelle on peut faire pivoter cette pièce 16 autour de son centre pour régler le parallèlisme entre la face à polir 15b de l'échantillon 15 et le milieu abrasif. Lorsque ce parallèlisme est obtenu, le serrage d'une vis pointeau 100 assure le blocage en position de la pièce 16 dans le logement 17. Le bras 18 est articulé, à son extrémité opposée à la pièce 16, autour de l'axe 19, sur une chape 21 d'une pièce intermédiaire en forme de T, 22 s'étendant dans un plan parallèle au disque 5.

Chacun des axes 19 est horizontal et orthogonal par rapport à l'axe longitudinal du bras 18 correspondant et les chapes 21 sont prévues aux extrémités libres de la barre supérieure 22a de la pièce 22; cette dernière est montée axialement coulissante le long de l'axe longitudinal 22b de sa barre inférieure 22c dans une glissière 23 du bâti 13. Ainsi, la pièce 22 est montée sur le bâti 13 pour ne pouvoir se déplacer que suivant l'axe 22b qui est parallèle au plan du disque 5.

Des moyens moteurs sont prévus pour imprimer à la pièce 22 un mouvement alternatif de coulissement suivant cet axe 22b.

Selon les exemples représentés sur les figures 6 et 7, les moyens moteurs comprennent une bielle 24 articulée, d'une part, en un point excentré 25 d'un disque horizontal 26 et, d'autre part, sur l'extrémité libre de la barre 22c de la pièce, par l'intermédiaire d'une fourche d'extrémité 24a de la bielle 24.

Le disque 26 peut être entraîné en rotation autour de son axe par un moteur 27.

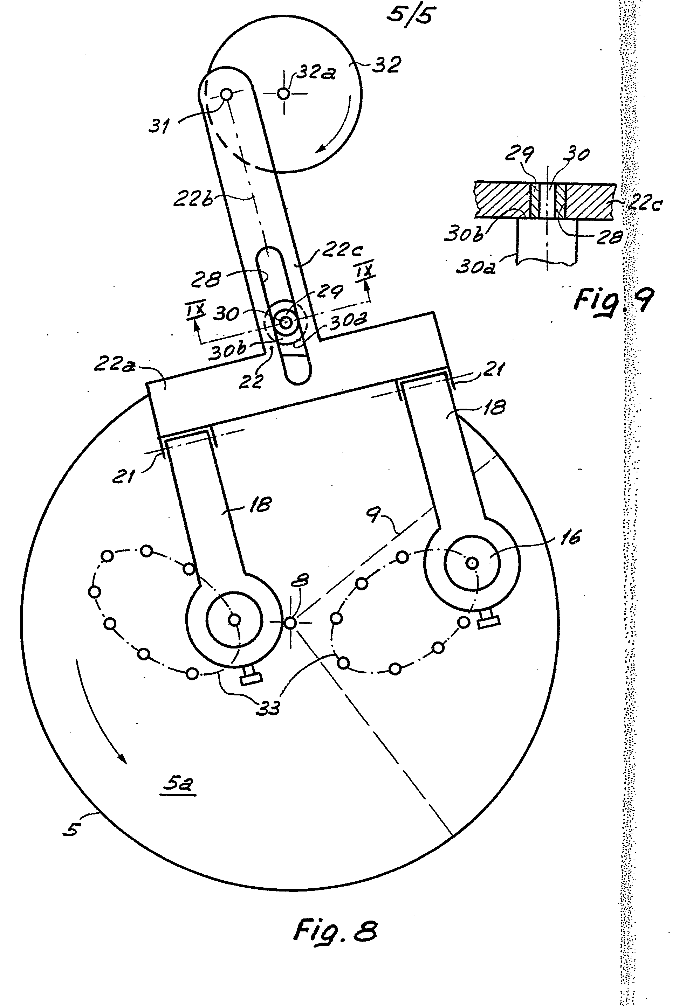

Sur la figure 8, les éléments analogues à ceux des figures 6 et 7 portent les mêmes références. Le mode de réalisation des figures 8 et 9 diffère de celui des figures 6 et 7 notamment par le fait que la pièce en forme de T 22 peut à la fois tourner autour d'un pivot fixe du bâti 13 et se déplacer le long de l'axe 22b de sa barre inférieure 22c.

A cet effet, la barre 22c présente une rainure ou lumière longitudinale 28 dans laquelle s'engage sensiblement sans jeu transversal un galet 29 monté fou sur un axe fixe 30 du bâti 13.

La barre 22c est articulée, à son extrémité libre, sur un point excentré 31 d'un disque horizontal 32 pouvant être entraîné en rotation autour de son axe 32a par un moteur non représenté.

Lors de la rotation du disque 32, la pièce 22 est animée d'un mouvement telle qu'elle imprime à chacun des échantillons enrobés 15 montés à l'extrémité des bras 18, un déplacement suivant une trajectoire elliptique 33, sur le milieu abrasif plan 5a. Chaque trajectoire 33 est inscrite dans un angle inférieur à 90° et ayant pour sommet le centre de rotation 8 du disque 5.

Les échantillons enrobés 15 sont maintenus appliqués contre le milieu abrasif 5a par un ressort (non représenté) monté sur la pièce 22 et agissant sur le bras 18 correspondant.

Comme le montre la figure 9, l'axe 30 est prolongé vers le bas par une partie coaxiale de plus grand diamètre 30a, elle-même fixée au bâti 13, de sorte qu'est ménagé un épaulement annulaire horizontal 30b sur lequel repose et glisse la barre 22c.

Il est à noter que la vitesse de rotation du disque 25 (figures 6 et 7) ou 32 (figure 8) doit être suffisamment inférieure à celle du milieu abrasif 5a tournant autour de l'axe 5b, afin que le mouvement relatif entre l'échantillon 15 et le milieu abrasif 5a demeure toujours une translation sensiblement unidirectionnelle, c'est-à-dire un mouvement de translation gardant toujours sensiblement la même orientation.

REVENDICATIONS

1. Procédé de polissage d'un échantillon solide (1;15), notamment d'un échantillon métallographique, selon lequel on applique l'échantillon par une face de contact (1a;15b) sur un milieu abrasif souple (5a) et on établit un mouvement relatif entre ledit milieu abrasif (5a) et ledit échantillon (1;15), caractérisé en ce que ledit mouvement relatif est principalement un mouvement de translation sensiblement unidirectionnel, moyennant quoi on obtient, après polissage, un bord à angle vif sur le côté de la périphérie de la face de contact orienté en sens inverse du déplacement de l'échantillon par rapport à la paroi abrasive.

2. Procédé selon la revendication 1, caractérisé en ce que ledit mouvement relatif comprend en outre un mouvement oscillant de rotation d'amplitude angulaire limitée, de l'échantillon (1;15) par rapport au milieu abrasif (5a) autour d'un axe (20) perpendiculaire à la face de contact (1a;15b).

3. Procédé selon la revendication 2, caractérisé en ce que ladite amplitude angulaire est inférieure à environ 90°.

4. Procédé selon la renvendication 3, caractérisé en ce que ladite amplitude angulaire est d'environ 45°.

5. Procédé selon l'une des renvendications 1 à 4, caractérisé en ce qu'on utilise un milieu abrasif (5a) sensiblement plan, on fait tourner ce milieu autour d'un axe (5b) qui lui est perpendiculaire, et on déplace l'échantillon (1;15) en va-et-vient le long d'un trajet sensiblement rectiligne (6) dont les deux extrémités sont situées à égale distance de l'axe de rotation dudit milieu abrasif.

6. Procédé selon l'une des revendications 1 à 4, caractérisé en ce qu'on utilise un milieu abrasif (5a) sensiblement plan, on fait tourner ce milieu autour d'un axe (5b) qui lui est perpendiculaire et on déplace l'échantillon (1;15) le long d'un trajet fermé (7;33).

7. Dispositif de polissage d'un échantillon solide (15), du type comprenant : des moyens pour appliquer ledit échantillon sur un milieu abrasif souple (5a) et des moyens de déplacement pour établir un mouvement relatif entre ledit milieu abrasif et ledit échantillon, caractérisé en ce que lesdits moyens de déplacement sont des moyens (16 à 19,21 à 27;16 à 19,21,22,28 à 32) pour établir entre l'échantillon (15) et le milieu abrasif souple (5a) un mouvement relatif comprenant principalement un mouvement de translation unidirectionnel.

8. Dispositif selon la revendication 7, caractérisé en ce qu'il comprend :

- un bâti (13);
- un disque de polissage (5) monté, sur le bâti, rotatif autour de son axe (5b);
- un milieu abrasif (5a) fixé sur la face supérieure du disque (5);
- un moteur (14) pour entraîner ce disque en rotation autour de son axe (5b);
- au moins un support (16,18) sur lequel un échantillon (15) peut être monté avec une partie (15a) de ce dernier dépassant dudit support;
- des moyens pour solliciter ce support en direction du disque de polissage (5) pour appliquer ladite partie dépassante (15a) de l'échantillon (15) par une face de contact (15b) de ce dernier sur le milieu abrasif (5a); et
- des moyens (22 à 27;22,28 à 32) pour déplacer ledit support (16,18) par rapport au bâti (13) suivant un mouvement pour lequel la face de contact (15b) maintenue appliquée contre le milieu abrasif (5a) parcourt un trajet (6;7;33) situé à l'intérieur d'un secteur imaginaire fixe (9) ayant pour sommet le centre du disque (8) et environ 90° d'ouverture angulaire.

9. Dispositif selon la revendication 8, caractérisé en ce que ledit trajet (6) est sensiblement rectiligne, et ses deux extrémités sont situées à égale distance de l'axe de rotation (5b) du disque (5).

10. Dispositif selon la renvendication 8, caractérisé en ce que ledit trajet (33) est un trajet fermé.

0047720

Fig.1

Fig.2

2/5

0047720

*Fig.3*

9

2

1a

b

8

7

5

5a

11

12

2

20

1

2

*Fig.5*

3

10

4

F

*Fig.4*

3/5

0047720

Fig.6

*Fig. 7*

0047720

Fig. 8

Fig. 9